# EUROPEAN PATENT SPECIFICATION

(11) **EP 0 691 067 B1**
(45) Date of publication and mention of the grant of the patent: **04.12.2002**
(21) Application number: 95905664.9
(22) Date of filing: 20.01.1995
(51) Int. Cl.: H04Q 7/38

(54) **METHOD OF PROVIDING SERVICE IN A MOBILE COMMUNICATION SYSTEM, MOBILE COMMUNICATION SYSTEM AND BASE STATION**
VERFAHREN ZUR BEREITSTELLUNG VON DIENSTEN IN EINEM MOBILKOMMUNIKATIONSSYSTEM, MOBILKOMMUNIKATIONSSYSTEM UND BASISSTATION
PROCEDE DE FOURNITURE DE SERVICE DANS UN SYSTEME DE COMMUNICATION MOBILE, SYSTEME DE COMMUNICATION MOBILE ET STATION DE BASE

(30) Priority: 21.01.1994 FI 940312
(43) Date of publication of application: 10.01.1996
(73) Proprietor: Nokia Corporation, 02150 Espoo (FI)
(72) Inventor: TUULOS, Matti, FIN-33900 Tampere (FI); HELENIUS, Ali, FIN-37120 Nokia (FI)
(74) Representative: Äkräs, Tapio Juhani
(86) International application number: FI9500023
(87) International publication number: WO95020300

(56) References cited:
- WO-A-93/11646
- FI-B- 92 007

## Description

The invention relates to a method, a mobile communication system and a base station for providing service in a mobile communication system comprising an exchange, base stations with coverage areas, mobile stations, and a centralized database for storing subscriber data of mobile stations located within the service area of the system.

In some mobile communication and mobile telephone networks of the prior art, subscriber information, i.e. the subscriber database, is stored in a centralized manner in one network element, usually in an exchange or a subscriber database connected to it such cellular mobile network is disclosed in WO-A1-93/11646. In a larger network, the subscriber data may also be stored in a decentralized manner in so-called home mobile telephone exchanges and visited mobile telephone exchanges or visitor databases. This is the case, for example, in GSM mobile communication systems.

The drawback of such a system based on centralized registers is that it takes a very long time to establish a connection between mobile stations located within the coverage area of one base station. This is because the location data of the mobile stations must be requested and their subscriber data must be checked from a centralized register located far from the base station within whose area the mobile stations or subscriber stations between which the connection is to be established are located. Interrogation of data from a register located at a great distance, even behind other exchanges or network elements, is slow and uncertain, as the telecommunication connections may be broken. In the above-described large mobile telephone networks, where the subscriber data are stored in separate, centralized home and visitor location registers or corresponding exchanges, interrogation of subscriber data from the centralized subscriber database takes a considerable amount of the call establishment time. The interrogation time becomes easily longer than 1 s. However, authorities using mobile telephone systems, for example, require that the entire call establishment procedure within the area of one base station must not take longer than 300 ms even though the subscriber data of the subscriber are verified. In this kind of prior art solution, the subscriber data interrogation time is considerably prolonged by the data transmission delay between the exchange and the base station, as it is often not economically possible to use sufficient transmission capacity between them. Interrogation of subscriber data is particularly important, as it involves authentication of the subscriber. Authentication of the subscriber means that it is examined whether the subscriber and/or the mobile station are/is allowed to use the network services.

Another solution of the prior art is that in small systems comprising one base station, the subscriber data are stored in the base station. This is implemented in such a manner, however, that base stations possibly interconnected via speech paths cannot exchange subscriber data with each other. Such digital portable telephone system is disclosed in JP5336563.

The drawback of this solution is that when subscriber data are to be updated, they cannot be updated at each base station of the network. In addition, it is not possible to construct larger networks by this technology: if base stations are interconnected directly without any exchanges, communication between the base stations takes up more interface capacity of the base stations than maintenance of the actual radio channels. The problem is even more serious when a larger number of base stations are interconnected.

Yet another solution of the prior art is a so-called fallback function of the base station. This kind of a base station does not have a subscriber database of its own, but it can switch calls between subscribers located within its coverage area.

The disadvantage of this solution is that the subscriber data of subscribers or mobile stations which are about to register at the base station or wish to establish a call cannot be verified or authenticated. It is therefore possible that an illegal subscriber starts to communicate using the resources of this base station.

The prior art solutions described above are not suitable for use in mobile telephone networks where calls must be established rapidly but where a large number of subscriber data are needed, e.g. in private mobile radio (PMR) networks used by authorities. The subscriber data include subscriber-specific information on the rights of each subscriber to the network services, on priorities, security codes, operating state, group call groups, and other data. Furthermore, it should be possible to provide a very large permitted operating area for a subscriber in such a PMR network used by authorities: e.g. a whole country or even a larger area. On the basis of the above, it is thus evident that the prior art solutions described do not meet the requirements set by large mobile communication networks or mobile telephone networks, typically PMR networks used by autorities, which require rapid establishment of connection and rapid verification of subscriber data.

The object of the present invention is to solve the problems associated with the above-described solutions of the prior art. It is an object of the present invention to provide a mobile telephone network which is capable of rapid establishment of connection and verification of subscriber data and which may be extremely large, covering for example a whole country. In addition, it must be possible to update the subscriber data of such a network flexibly and in a centralized manner.

This new type of method for providing service in a mobile communication system is achieved, with a method according to the invention, which is characterized in that each base station maintains a database containing the subscriber data of mobile stations registered at the base station by fetching the subscriber data of a mobile station from said centralized database when the mobile station registers at the base station; the mobile station sends a service request to the base station; the base station verifies the access right of said mobile station from the database maintained at said base station; if said mobile station has the access right, the base station provides the service requested by the service request.

The invention also relates to a base station according to claim 10.

The invention further relates to a mobile communication system according to claim 13.

The invention is based on the idea that in a mobile communication system comprising a centralized database containing subscriber data; the base stations maintain smaller databases for storing the subscriber data of the mobile stations registered at the base station in question. When a mobile station wishes to use a telecommunications service offered by the system, e.g. to establish a call, the subscriber data of this mobile station are checked from the database of the base station in question, whereafter the base station sets up the connection. The connection establishment is expedited particularly in a situation where a connection is to be set up to a mobile station registered at the same base station.

An advantage of such a method for providing service in a mobile communication system, a mobile communication system and a base station is that when a call is made within the area of one base station, it is not necessary to request the subscriber data needed for establishing the call from the exchange or, via the exchange, from the centralized database of the system. Particularly most of the connections which are established between authorities and require rapid communication fall within the area of one base station. Examples of such connections are those needed by a police patrol on duty, by a fire brigade in the event of a fire, and by an ambulance on the scene of an accident.

The invention allows a call to be established within the area of one base station more rapidly than if the subscriber data had to be requested every time from a centralized database. This advantage is particularly apparent in systems where most of the traffic takes place within the area of one base station. An example of such a system is the police radio system, in which the police make a large number of calls in quick succession within the area of only one base station. The fastness of connection establishment is naturally very significant in police use and other emergency use.

Another advantage of the method according to the invention is that the base station is able to serve subscribers remaining within its area even when the connection to the exchange is broken for one reason or another. This is a very important feature especially in PMR networks used by authorities, where it may be of utmost significance to have functioning connections, and where attempts may be made to intentionally disturb or even disconnect data link connections between, for instance, the base station and other parts of the system.

Yet another advantage of the method according to the invention is that the decentralized databases at the base stations of the mobile communication system can be maintained so that they constantly contain the new subscriber data of the mobile stations registered at these base stations.

Still a further advantage of the invention is that it renders it possible to construct larger networks than the prior art solution in which the base stations did have databases, but the base stations where interconnected through telecommunication connections. This enables the construction of extremely large mobile telephone networks for the use of national authorities.

Yet another advantage of the invention is that it allows the subscriber data of mobile stations communicating within the area of the base station to be verified and authenticated, and safe connections between mobile stations located within the coverage area of the base station to be established even in cases where the telecommunication connections between the base station and the exchange are broken.

In the following, the invention will be described in greater detail with reference to the accompanying drawings, in which
Figure 1 is a block diagram of a mobile communication system according to the invention with subscriber databases,
Figure 2 is a signalling and event diagram of the registration of a mobile station at a base station,
Figure 3 is a signalling and event diagram of connection establishment within the service area of a base station.

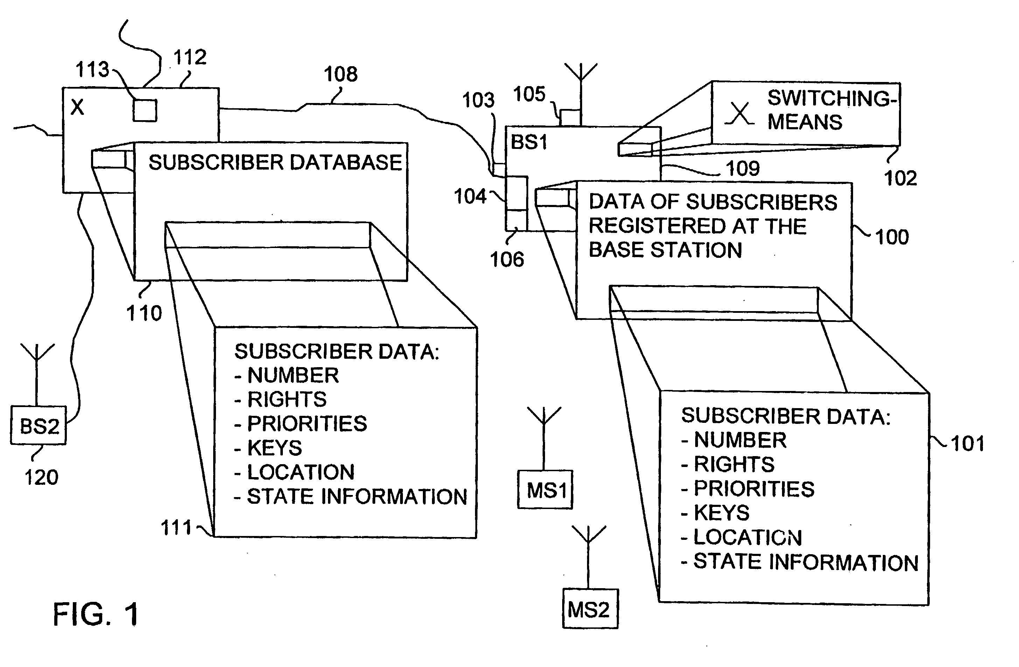

Figure 1 is a block diagram of a mobile communication system according to the invention with subscriber databases. The mobile communication system comprises a base station BS1, at which a mobile station MS1, which is a subscriber station (i.e. a mobile or radio telephone, for example), is registered.

The base station BS1, BS2, 109 comprises a database 100 for storing the subscriber data 101 of subscribers registered at the base station BS1. The subscriber data may include, for example, the number or other identifier of the subscriber, the rights belonging to the subscriber, i.e. mainly information on the functions and services which the mobile station in question is entitled to use. In addition, these services or some of them are associated with a certain priority. The subscriber data further include encryption keys, used in the communication between the base station and a mobile station for encrypting traffic taking place on a radio path. The subscriber data also include the location of the mobile station, e.g. with an accuracy of a base station or a location area. In addition, the subscriber data include information on the state of the mobile station, i.e. on whether the subscriber station in question is switched on, and whether the mobile station communicates on a traffic channel or whether it only listens to a control channel. The state information also includes, for example, information on ongoing group calls.

The base station BS1 further comprises switching means 102 for establishing connections between mobile stations MS1, MS2 registered at the base station. The base station BS1, BS2 also comprises at least one transceiver unit 105 connected to an antenna. The transceiver unit 105 communicates with mobile stations MS1, MS2 via a radio path.

The base station also comprises means 104 for verifying, from the database 100 of the base station, the access right of the mobile station MS1 that sent the service request to the base station, said database containing the subscriber data 101 of the mobile stations MS1, MS2 registered at the base station.

In addition, the base station BS1, BS2 comprises means 106 for requesting the subscriber data 111 of a mobile station MS1 registered at the base station from a centralized database 110.

The base station BS1, BS2 further comprises an interface unit 103 for connecting the base station through telecommunication connections 108 to the exchange 112, X of the mobile communication system.

The exchange 112 shown in Figure 1 comprises a database 110 for storing, in a centralized manner, the subscriber data 111 of mobile stations located within the service area of the mobile communication system. The mobile communication system may comprise means 113 for erasing the subscriber data of a mobile station from the database of the base station BS2, 120 at which the mobile station MS1 is no longer registered, responsive to the request 106 for subscriber data made by the base station BS1, 100 at which the mobile station MS1 is registered. The means 113 are located, for example, at the exchange 112 of the mobile communication system or in connection with the above-mentioned centralized database 110.

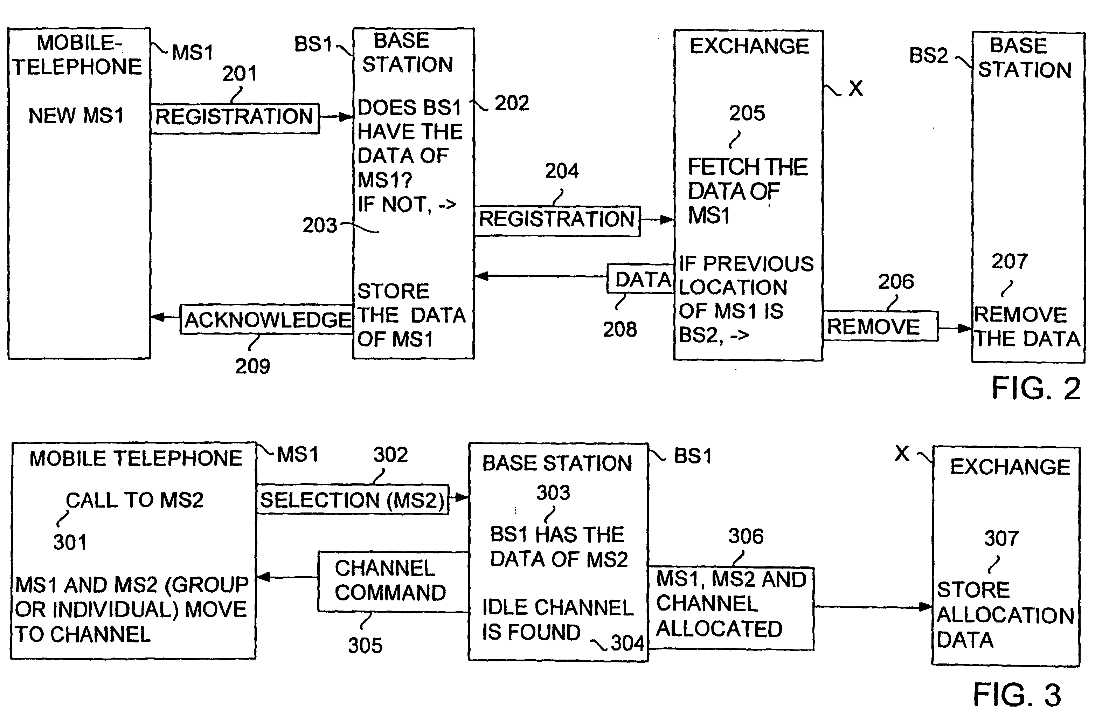

Figure 2 is a signalling and event diagram of the registration of a mobile station MS1 at a base station BS1. The MS1 is a new subscriber registering at the area of the base station BS1 by transmitting a registration message 201. After that, the base station BS1 may check 202 whether its database 100 already contains the subscriber data of the subscriber MS1. If the database does not 203 contain these subscriber data, the base station BS1 sends 204 a registration message to the exchange X of the mobile communication system. The exchange fetches 205 the data of the mobile station or subscriber from the centralized database 110 and simultaneously checks the location of the mobile station. If the mobile station has changed its base station, i.e. moved away from the service area of a base station BS2 to the service area of a new base station BS1, the exchange X sends 206 a remove message to the old base station BS2. Responsive to this message, the old base station BS2 removes 207 the subscriber data of the mobile station MS1 from its database.

On receiving a registration message from the (new) base station BS1 and verifying 205 the subscriber data of the mobile station, the exchange sends 208 the subscriber data of the mobile station as a data message to the (new) base station BS1 which sent the registration message. The base station BS1 stores the subscriber data 101 of the mobile station in its database 100. Thereafter the base station BS1 sends 209 an acknowledge message to the mobile station. By this message, the base station informs that the registration of the mobile station has succeeded at the base station.

Figure 3 is a signalling and event diagram of connection establishment within the service area of the base station BS1. A mobile station MS1, e.g. a mobile telephone, wishes to establish a telecommunication connection, e.g. a call 301, to a B-subscriber, i.e. to another mobile station MS2. The mobile station MS1 sends a connection establishment request 302, comprising the identifier of the B-subscriber, i.e. the identifier of the other mobile station. The base station BS1 receives this connection establishment request 302 and checks 303 the subscriber data 101 of the calling subscriber, i.e. the mobile station MS1, from its database 100 according to the invention, and performs the necessary verifications, and authentication and authorization of the subscriber. At the same time, the subscriber data of the receiving B-subscriber can also be checked from the database 100. If the base station BS1 has 304 a free channel which the mobile station can use, it sends a channel command 305, by which it commands the mobile stations MS1, MS2 to move to the desired channel(s). Thereafter the base station BS1 sends 306 information to the exchange X on the allocation of the channel(s). The exchange X stores 307 these data in its database or in the centralized database of the system.

When the above-described method of the invention is used, the time it takes to establish a call is shortened approximately from a few seconds to a few milliseconds. Such an improvement is possible, as data can be very rapidly retrieved from the relatively small subscriber data table in the database 100 of the base station BS1, implemented e.g. by means of a rapid RAM memory, as compared with fetching the subscriber data from a large centralized subscriber database over an uncertain data link, in which case transmission errors and transmission delays, for example, cause a significant additional delay.

The drawings and the description relating to them are intended merely to illustrate the inventive concept. In its details, the method for providing service in a mobile communication system, the mobile communication system and the base station according to the invention can be modified within the scope of the claims. Although the invention has been described above mainly in connection with mobile telephone systems, it may also be used in other kinds of mobile communication systems.

## Claims

1. A method for providing service in a mobile communication system comprising an exchange (X, 112), base stations (BS1, BS2, 109) with coverage areas, mobile stations (MS1, MS2), and a centralized database (110) for storing subscriber data (111) of mobile stations (MS1, MS2) located within the service area of the system, **characterized in that**
each base station (BS1) maintains a database (100) containing the subscriber data (101) of mobile stations (MS1) registered at the base station by fetching (204) the subscriber data of a mobile station from said centralized database (110) when the mobile station registers (201) at the base station (BS1);
the mobile station (MS1) sends a service request (302) to the base station;
the base station verifies (303) the access right of said mobile station from the database (100) maintained at said base station;
if said mobile station has the access right, the base station (BS1) provides the service requested by the service request (302).

2. A method according to claim 1, **characterized in that** the step in which the base station maintains the database (100) comprises the following steps:
if the subscriber data of the mobile station which sent the registration message are not (203) contained in the database (100) of the base station, the base station (BS1) requests (204) the subscriber data (111) of said mobile station from the centralized database (110) of the system,
responsive to this request, said subscriber data are sent (208) to said base station (BS1),
said base station (BS1) stores said subscriber data in its database (100).

3. A method according to claim 2, **characterized in that**, responsive to the request (204) made by the base station for subscriber data from the centralized database, another base station (BS2) is requested (206) to remove the subscriber data of said mobile station from its database and, responsive to this request, the other base station (BS2) removes the subscriber data of said mobile station from its database.

4. A method according to claim 2 or 3, **characterized in that** on receiving the subscriber data of said mobile station, the base station (BS1) sends (209) an acknowledge message to the mobile station (MS1) which sent the registration message (201).

5. A method according to claim 1, **characterized in that** said service request (302) is a connection establishment request, responsive to which the base station switches (102) a telecommunication connection from said mobile station (MS1) to a destination (MS2) defined in the connection establishment request (302).

6. A method according to claim 5, **characterized in that** when switching (102) the telecommunication connection from said mobile station (MS1) to the destination (MS2) defined in the connection establishment request (302), the base station (BS1) commands (305) said mobile station to move to the desired radio channel.

7. A method according to claim 5 or 6, **characterized in that** when switching (102) the telecommunication connection from said mobile station (MS1) to the destination defined in the connection establishment request (302), the base station (BS1) sends (306) to the exchange (X) information on said mobile station, said destination, and the radio channel to be used.

8. A method according to any one of claims 5 to 7, **characterized in that** the destination defined in the connection establishment request (302) is another mobile station (MS2) registered at said base station (BS1).

9. A method according to claim 8, **characterized by** comprising the following steps:
a mobile station (MS1) registered at the base . station sends (302) a connection establishment request to the base station for requesting establishment of a connection to another mobile station (MS2),
the base station verifies the access right of said mobile station (MS1) from the database (100) maintained at said base station (BS1),
the base station detects that the subscriber data of said other mobile station (MS2) are stored in the database (100) of said base station (BS1),
the base station establishes (102) the desired connection between said one mobile station (MS1) and said other mobile station (MS2).

10. A base station (BS1, BS2, 109) comprising:
a transceiver unit (105),
an interface unit (103) for connecting the base station through telecommunication connections (108) to the exchange (112) of the mobile communication system
**characterized in that** each one of said base stations comprises
a database (100) for storing subscriber data (101) of mobile stations (MS) registered at the base station,
said database being arranged to fetch the subscriber data of a mobile station from a centralized database of the mobile communication system. When the mobile station registers at the respective base station,
means (104) for verifying from said database (100) the access right of a mobile station (MS1) which sent a service request to the base station.

11. A base station according to claim 10, **characterized in that** it further comprises
means (106) for requesting (204) the subscriber data (111) of a mobile station registering at the base station from a centralized database (110) of the mobile communication system.

12. A base station according to claim 10 or 11, **characterized in that** it further comprises switching means (102) for establishing connections between mobile stations (MS1, MS2) registered at the base station.

13. A mobile communication system comprising:
base stations (BS1, BS2),
an exchange (X, 112),
a first database (110) for storing, in a centralized manner, subscriber data (111) of mobile stations located within the service area of the system,
the system being **characterized in that** each one of said base stations comprises
a second database (100) for storing the subscriber data (101) of mobile stations (MS) registered at the base station,
said database being arranged to fetch subscriber data of a mobile station (MS) from a centralized database (110) of the mobile communication system, when the mobile station registers at the respective base station,
means (104) for verifying from said second database (100) the access right of a mobile station (MS1) which has sent a service request to said base station.

14. A mobile communication system according to claim 13, **characterized in that** each one of said base stations comprises
switching means (102) for establishing connections between mobile stations (MS1, MS2) registered at said base station (BS1).

15. A mobile communication system according to claim 13, **characterized in that** it further comprises
means (113) for erasing the subscriber data (101) of a mobile station from a second database (100) of an old base station (BS2) at which the mobile station is no longer registered, responsive to a registration request (204) for subscriber data of the mobile station made (106) by the one of said base stations (BS1) at which the mobile station is registered.

## Patentansprüche

1. Verfahren zur Bereitstellung von Diensten in einem Mobilkommunikationssystem, das eine Vermittlung (X, 112), Basisstationen (BS1, BS2, 109) mit Sendebereichen, Mobilstationen (MS1, MS2) und eine zentralisierte Datenbank (110) zur Speicherung von Teilnehmerdaten (111) von innerhalb des Dienstbereichs des Systems befindlichen Mobilstationen (MS1, MS2) aufweist,
**dadurch gekennzeichnet, dass**
jede Basisstation (BS1) eine Datenbank (100) verwaltet, die die Teilnehmerdaten (101) von Mobilstationen (MS1) enthält, welche bei der Basisstation registriert sind, indem sie die Teilnehmerdaten einer Mobilstation von der zentralisierten Datenbank (110) abruft (204), wenn sich die Mobilstation bei der Basisstation (BS1) registriert (201),
die Mobilstation (MS1) eine Dienstanforderung (302) an die Basisstation sendet,
die Basisstation das Zugriffsrecht der Mobilstation anahnd der an der Basisstation verwalteten Datenbank (100) verifiziert (303),
wenn die Mobilstation das Zugriffsrecht hat, die Basisstation (BS1) den durch die Dienstanforderung (302) angeforderten Dienst bereitstellt.

2. Verfahren nach Anspruch 1, **dadurch gekennzeichnet, dass** der Schritt, in dem die Basisstation die Datenbank (100) verwaltet, die nachfolgenden Schritte aufweist:
wenn die Teilnehmerdaten der Mobilstation, die die Registrierungsnachricht gesendet hat, nicht (203) in der Datenbank (100) der Basisstation enthalten sind, fordert (204) die Basisstation (BS1) die Teilnehmerdaten (111) der Mobilstation von der zentralisierten Datenbank (110) des Systems an,
ansprechend auf diese Anforderung werden die Teilnehmerdaten zu der Basisstation (BS1) gesendet (208),
die Basisstation (BS1) speichert die Teilnehmerdaten in ihrer Datenbank (100).

3. Verfahren nach Anspruch 2, **dadurch gekennzeichnet, dass** ansprechend auf die seitens der Basisstation gestellte Anforderung (204) von Teilnehmerdaten von der zentralisierten Datenbank, eine weitere Basisstation (BS2) aufgefordert wird (206) die Teilnehmerdaten der Mobilstation aus ihrer Datenbank zu entfernen, und ansprechend auf diese Aufforderung entfernt die weitere Basisstation (BS2) die Teilnehmerdaten der Mobilstation aus ihrer Datenbank.

4. Verfahren nach Anspruch 2 oder 3, **dadurch gekennzeichnet, dass** beim Empfang der Teilnehmerdaten der Mobilstation die Basisstation (BS1) eine Bestätigungsnachricht an die Mobilstation (MS1) sendet (209), die die Registrierungsnachricht (201) gesendet hat.

5. Verfahren nach Anspruch 1, **dadurch gekennzeichnet, dass** die Dienstanforderung (302) eine Verbindungserrichtungsanforderung ist, auf die ansprechend die Basisstation eine Telekommunikationsverbindung von der Mobilstation (MS1) zu einem Ziel (MS2) vermittelt (102), welches in der Verbindungserrichtungsanforderung (302) definiert ist.

6. Verfahren nach Anspruch 5, **dadurch gekennzeichnet, dass** beim Vermitteln (102) der Telekommunikationsverbindung von der Mobilstation (MS1) zu dem in der Verbindungserrichtungsanforderung (302) definierten Ziel (MS2) die Basisstation (BS1) die Mobilstation anweist (305), auf den gewünschten Funkkanal zu gehen.

7. Verfahren nach Anspruch 5 oder 6, **dadurch gekennzeichnet, dass** beim Vermitteln (102) der Telekommunikationsverbindung von der Mobilstation (MS1) zu dem in der Verbindungserrichtungsanforderung (302) definierten Ziel die Basisstation (BS1) der Vermittlung (X) Informationen bezüglich der Mobilstation, des Ziels und des zu verwendenden Funkkanals sendet (306).

8. Verfahren nach einem der Ansprüche 5 bis 7, **dadurch gekennzeichnet, dass** das in der Verbindungserrichtungsanforderung (302) definierte Ziel eine bei der Basisstation (BS1) registrierte weitere Mobilstation (MS2) ist.

9. Verfahren nach Anspruch 8, **gekennzeichnet durch** die folgenden Schritte:
eine an der Basisstation registrierte Mobilstation (MS1) sendet (302) eine Verbindungserrichtungsanforderung an die Basisstation zum Anfordern des Errichtens einer Verbindung zu einer weiteren Mobilstation (MS2),
die Basisstation verifiziert das Zugriffsrecht der Mobilstation (MS1) anhand der an der Basisstation (BS1) verwalteten Datenbank (100),
die Basisstation erfasst, dass die Teilnehmerdaten der weiteren Mobilstation (MS2) in der Datenbank (100) der Basisstation (BS1) gespeichert sind,
die Basisstation errichtet (102) die gewünschte Verbindung zwischen der einen Mobilstation (MS1) und der weiteren Mobilstation (MS2).

10. Basisstation (BS1, BS2, 109) mit:
einer Sendeempfängereinheit (105),
einer Schnittstelleneinheit (103) zum Verbinden der Basisstation über Telekommunikationsverbindungen (108) mit der Vermittlung (112) des Mobilkommunikationssystems, **dadurch gekennzeichnet, dass** jede der Basisstationen aufweist
eine Datenbank (100) zur Speicherung von Teilnehmerdaten (101) von Mobilstationen (MS), die bei der Basisstation registriert sind, wobei die Datenbank ausgestaltet ist, um die Teilnehmerdaten einer Mobilstation von einer zentralisierten Datenbank des Mobilkommunikationssystems abzurufen, wenn sich die Mobilstation bei der jeweiligen Basisstation registriert,
Einrichtungen (104) zum Verifizieren des Zugriffsrechts einer Mobilstation (MS1), die eine Dienstanforderung an die Basisstation gesendet hat, anhand der Datenbank (100).

11. Basisstation nach Anspruch 10, **dadurch gekennzeichnet, dass** sie zudem aufweist
Einrichtungen (106) zum Anfordern (204) der Teilnehmerdaten (111) einer Mobilstation, die sich bei der Basisstation registriert, von einer zentralisierten Datenbank (110) des Mobilkommunikationssystems.

12. Basisstation nach Anspruch 10 oder 11, **dadurch gekennzeichnet, dass** sie zudem aufweist
Vermittlungseinrichtungen (102) zum Errichten von Verbindungen zwischen Mobilstationen (MS1, MS2), die bei der Basisstation registriert sind.

13. Mobilkommunikationssystem, mit:
Basisstationen (BS1, BS2),
einer Vermittlung (X, 112),
einer ersten Datenbank (110) zur Speicherung, auf zentralisierte Weise, von Teilnehmerdaten (111) von innerhalb des Dienstbereichs des Systems befindlichen Mobilstationen,
wobei das System **dadurch gekennzeichnet ist, dass** jede der Basisstationen aufweist:
eine zweite Datenbank (100) zur Speicherung der Teilnehmerdaten (101) von bei der Basisstation registrierten Mobilstationen (MS), wobei die Datenbank ausgestaltet ist, um Teilnehmerdaten einer Mobilstation (MS) von einer zentralisierten Datenbank (110) des Mobilkommunikationssystems abzurufen, wenn sich die Mobilstation bei der jeweiligen Basisstation registriert,
Einrichtungen (104) zum Verifizieren des Zugriffsrechts einer Mobilstation (MS1), die eine Dienstanforderung an die Basisstation gesendet hat, anhand der zweiten Datenbank (100).

14. Mobilkommunikationssystem nach Anspruch 13, **dadurch gekennzeichnet, dass** jede der Basisstationen aufweist Vermittlungseinrichtungen (102) zum Errichten von Verbindungen zwischen Mobilstationen (MS1, MS2), die bei der Basisstation (BS1) registriert sind.

15. Mobilkommunikationssystem nach Anspruch 13, **dadurch gekennzeichnet, dass** es weiterhin aufweist
Einrichtungen (113) zum Löschen der Teilnehmerdaten (101) einer Mobilstation aus einer zweiten Datenbank (100) einer alten Basisstation (BS2), bei der die Mobilstation nicht mehr länger registriert ist, im Ansprechen auf eine Registrierungsanforderung (204) hinsichtlich Teilnehmerdaten der Mobilstation, die von derjenigen der Basisstationen (BS1) gestellt wurde, bei der die Mobilstation registriert ist.

## Revendications

1. Procédé pour assurer une prestation de service dans un système de communication mobile comprenant un central (X, 112), des stations de base (BS1, BS2, 109) ayant des zones de desserte, des stations mobiles (MS1, MS2) et une base de données centralisée (110) servant à stocker des données (111) d'abonnés de stations mobiles (MS1, MS2) situées dans la zone de desserte du système, **caractérisé en ce que**
chaque station de base (BS1) entretient une base de données (100) contenant les données (101) d'abonnés de stations mobiles (MS1) enregistrées auprès de la station de base en extrayant (204) de ladite base de données centralisée (110) les données d'abonné d'une station mobile lorsque la station mobile enregistre (201) à la station de base (BS1) ;
la station mobile (MS1) envoie à la station de base une demande (302) de service ;
la station de base vérifie (303) le droit d'accès de ladite station mobile dans la base de données (100) entretenue à ladite station de base ;
si ladite station mobile possède le droit d'accès, la station de base (BS1) offre le service demandé par la demande (302) de service.

2. Procédé selon la revendication 1, **caractérisé en ce que** l'étape au cours de laquelle la station de base entretient la base de données (100) comprend les étapes suivantes:
si les données d'abonné de la station mobile qui a envoyé le message d'enregistrement ne sont pas (203) contenues dans la base de données (100) de la station de base, la station de base demande à la base de données centralisée (110) du système les données d'abonné (111) de ladite station mobile,
en réponse à cette demande, lesdites données d'abonné sont envoyées (208) à ladite station de base (BS1),
ladite station de base (BS1) stocke lesdites données d'abonné dans sa base de données (100).

3. Procédé selon la revendication 2, **caractérisé en ce que**, en réponse à la demande (204), faite par la station de base, de données d'abonné figurant dans la base de données centralisée, il est demandé (206) à une autre station de base (BS2) de supprimer de sa base de données les données d'abonné de ladite station mobile et, en réponse à cette demande, l'autre station de base (BS2) supprime de sa base de données les données d'abonné de ladite station mobile.

4. Procédé selon la revendication 2 ou 3, **caractérisé en ce que**, au moment où elle reçoit les données d'abonné de ladite station mobile, la station de base (BS1) envoie (209) un message d'accusé de réception à la station mobile (MS1) qui a envoyé le message d'enregistrement (201).

5. Procédé selon la revendication 1, **caractérisé en ce que** ladite demande (302) de service est une demande d'établissement de connexion, en réponse à laquelle la station de base commute (102) une connexion de télécommunication depuis ladite station mobile (MS1) vers une destination (MS2) définie dans la demande (302) d'établissement de connexion.

6. Procédé selon la revendication 5, **caractérisé en ce que**, au moment où elle commute (102) la connexion de télécommunication depuis ladite station mobile (MS1) vers la destination (MS2) définie dans la demande (302) d'établissement de connexion, la station de base (BS1) demande (305) à ladite station de se placer sur la voie radioélectrique voulue.

7. Procédé selon la revendication 5 ou 6, **caractérisé en ce que**, au moment où elle commute (102) la connexion de télécommunication depuis ladite station mobile (MS1) vers la destination définie dans la demande (302) d'établissement de connexion, la station de base (BS1) envoie (306) au central (X) des informations sur ladite station mobile, ladite destination et la voie radioélectrique à utiliser.

8. Procédé selon l'une quelconque des revendications 5 à 7, **caractérisé en ce que** la destination définie dans la demande (302) d'établissement de connexion est une autre station mobile (MS2) enregistrée à ladite station de base (BS1).

9. Procédé selon la revendication 8, **caractérisé en ce qu'**il comprend les étapes suivantes :
une station mobile (MS1) enregistrée à la station de base envoie (302) à la station de base une demande d'établissement de connexion pour demander l'établissement d'une connexion vers une autre station mobile (MS2),
la station de base vérifie, dans la base de données (100) entretenue à ladite station de base (BS1), le droit d'accès de ladite station de base (MS1),
la station de base détecte que les données d'abonné de ladite autre station mobile (MS2) sont stockées dans la base de données (100) de ladite station de base (BS1),
la station de base établit (102) la connexion voulue entre ladite première station mobile (MS1) et ladite autre station mobile (MS2).

10. Station de base (BS1, BS2, 109) comprenant :
un système d'émetteur-récepteur (105),
un système d'interface (103) pour connecter la station de base, par l'intermédiaire de connexions de télécommunication (108), avec le central (112) du système de communication mobile, **caractérisée en ce que** chacune desdites stations de base comprend :
une base de données (100) servant à stocker des données d'abonnés (101) de stations mobiles (MS) enregistrées à la station de base, ladite base de données étant conçue pour extraire les données d'abonné d'une station mobile à partir d'une base de données centralisée du système de communication mobile au moment où la station mobile s'enregistre à la station de base respective,
un moyen (104) pour vérifier, dans ladite base de données (100), le droit d'accès d'une station mobile (MS1) qui a envoyé une demande de service à la station de base.

11. Station de base selon la revendication 10, **caractérisée en ce qu'**elle comprend en outre :
un moyen (106) pour demander (204) à une base de données centralisée (110) du système de communication mobile les données (111) d'abonné d'une station mobile s'enregistrant à la station de base.

12. Station de base selon la revendication 10 ou 11, **caractérisée en ce qu'**elle comprend en outre un moyen de commutation (102) pour établir des connexions entre des stations mobiles (MS1, MS2) enregistrées à la station de base.

13. Système de communication mobile, comprenant :
des stations de base (BS1, BS2),
un central (X, 112),
une première base de données (110) pour stocker, de manière centralisée, des données (111) d'abonnés de stations mobiles situées dans la zone de desserte du système,
le système étant **caractérisé en ce que** chacune desdites stations de base comprend :
une deuxième base de données (100) destinée à stocker les données (101) d'abonnés de stations mobiles (MS) enregistrées à la station de base, ladite base de données étant conçue pour extraire, d'une base de données centralisée (110) du système de communication mobile, des données d'abonné d'une station mobile (MS) lorsque la station mobile s'enregistre aux stations de base respectives,
un moyen (104) pour vérifier, dans ladite seconde base de données (100), le droit d'accès d'une station mobile (MS1) qui a envoyé une demande de service à ladite station de base.

14. Système de communication mobile selon la revendication 13, **caractérisé en ce que** chacune desdites stations de base comprend :
un moyen de commutation (102) pour établir des connexions entre des stations mobiles (MS1, MS2) enregistrées à ladite station de base (BS1).

15. Système de communication mobile selon la revendication 13, **caractérisé en ce qu'**il comprend en outre :
un moyen (113) pour effacer les données (101) d'abonné d'une station mobile dans une deuxième base de données (100) d'une ancienne station de base (BS2) à laquelle la station mobile n'est plus enregistrée, en réponse à une demande d'enregistrement (204) pour des données d'abonné de la station mobile, selon (106) l'une desdites stations de base (BS1) à laquelle la station mobile est enregistrée.
